# DEMANDE DE BREVET EUROPEEN

(11) **EP 1 798 654 A1**
(43) Date de publication de la demande: **20.06.2007**
(21) Numéro de dépôt: 05111336.3
(22) Date de dépôt: 25.11.2005
(51) Int. Cl.: G06F 21/00

(54) **Méthode d'accès à un contenu audio/vidéo à accès conditionnel**

(71) Demandeur: Nagravision S.A., 1033 Cheseaux-sur-Lausanne (CH)
(72) Inventeur: Moreillon, Guy, 1042, Bioley-Orjulaz (CH)
(74) Mandataire: Wenger, Joel-Théophile

(57) **Abrégé**

Le but de la présente invention est de proposer une méthode qui permette d'optimiser la consommation de contenus à accès conditionnel tout en garantissant une faible vulnérabilité aux messages de droits.

Ce but est atteint par une méthode d'accès à un contenu audio/vidéo à accès conditionnel administré par un centre de gestion et diffusé par un centre de diffusion, l'accès à ce contenu étant conditionné à la réception d'un message de droit comprenant l'autorisation d'accès sous forme d'un droit et/ou d'une clé, cette méthode comprenant les étapes d'accès par un utilisateur de terminal mobile à un ensemble de données décrivant une pluralité de contenus audio/vidéo disponibles auprès du centre de diffusion; de sélection par l'utilisateur dudit terminal mobile d'au moins un contenu audio/vidéo destiné à être diffusé à un temps prévu; de transmission par l'utilisateur du résultat de la sélection ainsi que d'un identifiant du terminal mobile dudit utilisateur au centre de gestion; de détermination par le centre de gestion d'un temps de rappel calculé selon le temps prévu de la diffusion prévue dudit contenu audio/vidéo moins un intervalle de temps de rappel prédéfini; lorsque le temps de rappel est atteint, envoi par le centre de gestion d'un message de notification contenant une indication permettant d'accéder au message de droit contenant l'autorisation d'accès audit contenu adressé audit terminal portable, et de validation du message de droit par le terminal portable et extraction de l'autorisation d'accès permettant l'accès audit contenu.

## Description

### Introduction

La présente invention concerne le domaine de la réception de contenus vidéo sur terminal mobiles, en particulier les procédures permettant l'envoi de contenus à la demande.

### Etat de la technique

Les serveurs de diffusion diffusent schématiquement deux types de produits, ceux en libre accès et ceux en accès conditionnel. Pour la seconde catégorie, le contenu est encrypté par au moins une clé de chiffrement. Lors de la diffusion dudit contenu chiffré, un descripteur indique quels sont les droits nécessaires pour avoir accès à ce contenu et la clé de chiffrement, ce descripteur étant dénommé message de contrôle ECM. Ce message est traité par un module de sécurité localisé dans le terminal mobile et qui comprend des moyens pour traiter ce message de contrôle et vérifier si le terminal portable dispose du droit correspondant.

Ainsi, avant la réception d'un contenu multimédia, le droit relatif à ce contenu doit être chargé dans le terminal, en particulier dans le module de sécurité. Selon un autre mode de réalisation, le droit est remplacé par une clé qui sera celle utilisée pour décrypter le message de contrôle comprenant la clé courante d'encryption du contenu.

Selon un mode conventionnel, l'utilisateur se connecte sur un service de présentation des contenus événementiels et choisi un ou des contenus qui l'intéresse. Dans ce mode dit point à point, un message est envoyé à l'utilisateur, message qui comprend la clé ou le droit pour accéder à l'événement.

Ce message est stocké dans les moyens de sécurité du terminal mobile et lorsque l'événement est proposé audit terminal mobile, le message est décrypté, le crédit est traité et la clé (CW) pour l'événement est retournée au terminal mobile.

On constate que de nombreuses fois l'utilisateur n'est pas en mesure de recevoir le contenu pour des raisons techniques (pas de réception) ou qu'il oublie simplement de le faire.

Un autre aspect est la sécurité du message transmis. En effet, ce message pouvant être transmis plusieurs jours en avance, cela donne autant de possibilités pour des tiers de casser un tel message est d'extraire le droit ou les clés et dès lors avoir accès au contenu sans en verser la contrepartie.

### Brève description de l'invention

Le but de la présente invention est de proposer une méthode qui permette d'optimiser la consommation de tels contenus à accès conditionnel tout en garantissant une faible vulnérabilité aux messages de droits.

Ce but est atteint par une méthode d'accès à un contenu audio/vidéo à accès conditionnel administré par un centre de gestion et diffusé par un centre de diffusion, l'accès à ce contenu étant conditionné à la réception d'un message de droit comprenant l'autorisation d'accès sous forme d'un droit et/ou d'une clé, cette méthode comprenant les étapes suivantes:
- accès par un utilisateur de terminal mobile à un ensemble de données décrivant une pluralité de contenus audio/vidéo disponibles auprès du centre de diffusion,
- sélection par l'utilisateur dudit terminal mobile d'au moins un contenu audio/vidéo destiné à être diffusé à un temps prévu,
- transmission par l'utilisateur du résultat de la sélection ainsi que d'un identifiant du terminal mobile dudit utilisateur au centre de gestion,
- détermination par le centre de gestion d'un temps de rappel calculé selon le temps prévu de la diffusion prévue dudit contenu audio/vidéo moins un intervalle de temps de rappel prédéfini,
- lorsque le temps de rappel est atteint, envoi par le centre de gestion d'un message de notification contenant une indication permettant d'accéder au message de droit contenant l'autorisation d'accès audit contenu adressé audit terminal portable,
- validation du message de droit par le terminal portable et extraction de l'autorisation d'accès permettant l'accès audit contenu.

Ainsi, selon l'invention, l'accès à un contenu se déroule en trois temps:
1. la sélection par l'utilisateur d'un contenu et l'annonce de cet intérêt audit centre de gestion.
2. l'envoi d'un message de notification contenant ou indiquant le message d'autorisation d'accès peu avant la diffusion dudit contenu, et stockage de ce message d'autorisation.
3. l'envoi du contenu lui-même et l'exploitation des données du message d'autorisation pour accéder aux données du contenu.

Il peut y avoir un quatrième temps, à savoir la validation du message d'autorisation par l'utilisateur. Cette validation se fait en général lors de la réception du contenu ou l'utilisateur confirme son intention d'achat.

Cette opération peut se faire automatiquement, sans l'intervention de l'utilisateur dès lors que ce dernier a sélectionné le récepteur de son terminal mobile sur le canal diffusant le contenu concerné.

### Brève description des figures

L'invention sera mieux comprise grâce à la description détaillée qui va suivre et qui se réfère aux dessins annexés qui sont donnés à titre d'exemple nullement limitatif, à savoir:
- la figure 1 décrit la première étape à savoir le placement de la commande,
- la figure 2 décrit la deuxième étape à savoir le réception d'un message de notification,
- la figure 3 décrit la troisième étape à savoir la réception du contenu multimédia.

### Description détaillée de l'invention

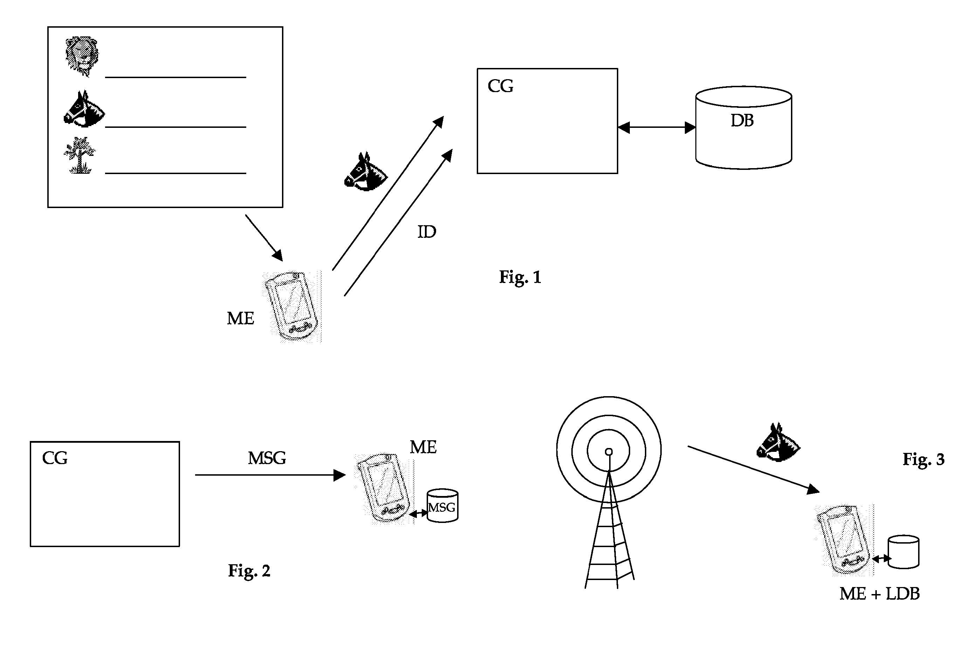

Tel qu'illustré sur la figure 1, l'utilisateur d'un terminal mobile ME dispose de deux moyens pour accéder la liste des contenus multimédia disponibles à la diffusion. Selon un premier mode, dit mode web, le terminal mobile se connecte sur un service de type internet et sélectionne la ou les pages qui l'intéresse. Il crée ainsi un canal virtuel point à point entre le centre de gestion CG et le terminal mobile ME en mode bidirectionnel. Une fois qu'il a fait sa sélection, la validation du ou des contenus choisis est mémorisée dans la base de donnée DB du centre de gestion avec une indication de l'identité ID du terminal mobile.

Le second moyen pour accéder à la liste des contenus proposés par le centre de gestion est de recevoir les données composant les listes sur un canal de diffusion propre à cet effet. Il s'agit alors d'une diffusion mono-directionnelle du type de ce que l'on peut recevoir comme guide électronique des programmes. Une fois la sélection faite par l'utilisateur, un message de réservation contenant le ou les contenus l'intéressant ainsi que l'indication de l'identité ID du terminal module ME est transmis au centre de gestion. Le message peut être envoyé par un simple message SMS, par un paquet GPRS ou une brève connexion de type web voire tout autre moyen de communication.

Il est à noter qu'à ce stade, le choix de l'utilisateur peut être que la manifestation de son intérêt et non une commande ferme. Le débit du compte de l'utilisateur étant géré ultérieurement lorsque ce dernier aura donné sa confirmation de commande.

La sélection par l'utilisateur peut rester vague sur le contenu choisi et n'indiquer qu'une catégorie de contenus. Ceci a pour conséquence que le centre de gestion va générer l'envoi d'un message de notification chaque fois qu'un contenu répond à la sélection de l'utilisateur. Pour une série telle que "Friends" par exemple, un tel message sera transmis avant la diffusion de chaque épisode.

Sur la figure 2 est illustré la seconde étape, à savoir la réception d'un message de notification MSG. Ce message est envoyé par le centre de gestion CG à destination du terminal mobile ME concerné et peut contenir un message de droit c'est-à-dire un droit ouvrant l'accès audit contenu ou une clé permettant de décrypter ledit contenu (ou les messages de contrôle accompagnant le contenu). A ce stade, la réception de ce message ne provoque pas la comptabilisation de prix convenu pour le contenu car le droit ou la clé n'est pas chargée dans la partie active du module de sécurité dudit terminal. Cette comptabilisation sera effective que lorsque l'utilisateur aura validé la proposition.

Selon une autre variante de l'invention, le message de notification contient une information permettant au terminal mobile de savoir ou un tel message de droit est à extraire dans le flux de données. Les données du message de droit tel que décrit plus haut ne sont pas placées dans le message de notification mais dans le flux de données, sur un service d'information par exemple. L'émission du message de notification ouvre une fenêtre en temps durant laquelle le centre de gestion provoque l'envoi des données du message de droit avec le flux des données multimédia. L'adresse permettant de configurer un filtre sur les données et d'accéder aux données du message de droit.

Selon un premier mode de réalisation, ce message de droit est encrypté par une clé de transmission qui est commune à tous les terminaux portables. Si l'on souhaite une meilleure sécurité, ce message pourra être encrypté par une clé propre audit terminal mobile ME. Dans le cas de l'envoi d'une clé de déchiffrement dans ledit message, cette clé peut être d'une part propre au futur contenu à déchiffrer et d'autre part encryptée par la clé spécifique de module de décryption du terminal mobile. Selon cette approche, chaque terminal mobile dispose d'une clé personnelle qui agit sur chaque clé envoyée au module de décryption. La clé propre au contenu doit donc être encryptée par la clé propre au terminal mobile avant d'être placée dans le message de notification. De ce fait, le message lui-même peut être encrypté par une clé commune à tous les terminaux mobiles, voire selon un mode de réalisation, envoyé en clair sans encryption.

Les éléments de ce message de droit sont stockés dans la base de données du terminal mobile ME. L'envoi du message de notification contenant ce message de droit se fait peu avant le début de la diffusion du contenu multimédia. Ceci permet de diminuer le temps pour qu'un tiers malveillant essaye de casser le message pour en extraire la clé ou les droits. Les moyens d'envoi sont divers et mettent en oeuvre les moyens technologiques existants tels que SMS, MMS, GPRS, Wifi. Ce message de notification MSG invite l'utilisateur à valider son achat pour le contenu spécifié. II dispose d'un moyen pour activer la réception du contenu mentionné sans devoir faire un appel au centre de gestion. Du fait de la proximité temporelle du début du contenu, l'utilisateur peut mieux connaître sa disponibilité lors de la diffusion du contenu.

Si l'utilisateur devait encore faire un appel au centre de gestion pour obtenir le droit ou la clé relative au contenu diffusé prochainement, ce centre serait rapidement surchargé peut avant la diffusion d'événements télévisuel importants.

Lorsque l'utilisateur accepte la proposition contenue dans le message de notification, une opération de comptabilisation est effectuée par le terminal mobile, en particulier par le module de sécurité dudit terminal mobile ME. Le droit ou la clé est chargé dans la base de données sécurisée LDB du terminal mobile, qui fait partie du module de sécurité, et le terminal mobile est prêt pour la troisième étape. Cette opération de comptabilisation peut débiter un crédit dans le module de sécurité du terminal portable, ou être simplement mémorisée pour être transmis au centre de gestion qui facturera l'utilisateur. Les modalités de comptabilisation peuvent être incluses dans le message de notification.

La figure 3 illustre la réception du contenu souhaité diffusé par le centre de diffusion. Le terminal mobile dispose maintenant du droit ou de la clé pour accéder à ce contenu. Selon une technique connue, le contenu est accompagné par des messages de contrôle ECM contenant les mots de contrôle CW qui sont les clés d'encryption temporaires du contenu. Ces messages sont envoyés au module de sécurité du terminal mobile et si le droit relatif à ce contenu est présent, le module de sécurité renvoie le mot de contrôle au module de décryption du contenu et permet ainsi l'exploitation dudit contenu. Le droit mentionné plus haut est inclus dans la base de données locale LDB du terminal mobile.

Dans notre exemple, nous avons décrit un centre de gestion distinct du centre de diffusion pour des raisons de clarté. Néanmoins, ces deux centre peuvent être réunis en une seule entité.

Selon une variante de l'invention, le message de droit peut comprendre plusieurs droits d'accès à des contenus, en particulier si les contenus sont liés par un concept commun. Si un utilisateur a manifesté son intérêt pour un match de football, le message de droit va inclure par exemple un droit pour l'ensemble des matchs de l'équipe sélectionnée par l'utilisateur. Le montant à débiter sur le crédit de l'utilisateur pourra être différent du montant que ce même utilisateur aurait payé s'il avait acheté chaque match individuellement.

Ce message comprendra une partie d'information à destination de l'utilisateur. Il pourra être informé des modalités de l'offre qui lui est proposée.

Lorsque le message de droit arrive au terminal mobile, soit de manière directe (toutes les données sont dans le message de notification) soit de manière indirecte (les données sont dans le flux de données), il provoque la création d'un nouveau rappel selon un temps prédéfini. Selon un exemple, le message de notification arrive une heure avant le début de la diffusion du contenu souhaité. Ce message provoque une fonction de rappel 10 minutes avant le début de la diffusion pour un rappel à l'utilisateur. Cette action de rappel peut être indépendante du fait que l'utilisateur ait ou non accepté l'achat du contenu. S'il ne l'a pas fait lors de l'arrivée du message, il pourra le faire lors du rappel.

Les paramètres de rappel peuvent soit être contenus dans les données du message de notification, soit être une fonction pré-programmée par l'utilisateur dans son terminal mobile. Il peut y avoir un ou plusieurs rappels, voire l'affichage en continu d'un pictogramme indiquant le temps restant.

Selon une variante de l'invention, la sélection par l'utilisateur du ou des contenus l'intéressant peut se faire par une autre voie que le terminal portable. Il peut se connecter avec son ordinateur auprès du site du centre de gestion et après la sélection des contenus, il indique le numéro de téléphone de son terminal portable (ou tout autre indication permettant d'adresser sans équivoque son terminal portable, telle qu'une adresse MAC). Ainsi, il dispose d'une plus grande flexibilité pour choisir le contenu qui l'intéresse et peut faire une sélection pour toute la semaine. Le ou les messages de notification seront envoyés sur terminal portable et il aura l'assurance de ne rien manquer.

## Revendications

1. Méthode d'accès à un contenu audio/vidéo à accès conditionnel administré par un centre de gestion et diffusé par un centre de diffusion, l'accès à ce contenu étant conditionné à la réception d'un message de droit comprenant l'autorisation d'accès sous forme d'un droit et/ou d'une clé, cette méthode comprenant les étapes suivantes:
- accès par un utilisateur de terminal mobile à un ensemble de données décrivant une pluralité de contenus audio/vidéo disponibles auprès du centre de diffusion,
- sélection par l'utilisateur dudit terminal mobile d'au moins un contenu audio/vidéo destiné à être diffusé à un temps prévu,
- transmission par l'utilisateur du résultat de la sélection ainsi que d'un identifiant du terminal mobile dudit utilisateur au centre de gestion,
- détermination par le centre de gestion d'un temps de rappel calculé selon le temps prévu de la diffusion prévue dudit contenu audio/vidéo moins un intervalle de temps de rappel prédéfini,
- lorsque le temps de rappel est atteint, envoi par le centre de gestion d'un message de notification contenant une indication permettant d'accéder au message de droit contenant l'autorisation d'accès audit contenu adressé audit terminal portable,
- validation du message de droit par le terminal portable et extraction de l'autorisation d'accès permettant l'accès audit contenu.

2. Méthode d'accès à un contenu à accès conditionnel selon la revendication 1, **caractérisée en ce que** le message de notification contient le message de droit.

3. Méthode d'accès à un contenu à accès conditionnel selon la revendication 1, **caractérisée en ce que** le message de notification contient des données de filtrage permettant de retrouver le message de droit dans les données transmises par le centre de diffusion.

4. Méthode d'accès à un contenu à accès conditionnel selon les revendications 1 à 3, **caractérisée en ce que** le centre de gestion diffuse l'ensemble de données décrivant une pluralité de contenus audio/vidéo à destination d'une pluralité de terminaux portables, la sélection d'un contenu audio/vidéo par l'utilisateur d'un terminal portable générant l'envoi d'un message de réservation comprenant le ou les contenus audio/vidéo sélectionnés et l'identifiant dudit terminal portable.

5. Méthode d'accès à un contenu à accès conditionnel selon les revendications 1 à 3, **caractérisée en ce que** l'utilisateur se connecte au centre de gestion pour la sélection parmi les contenus audio/vidéo proposés, la sélection d'un contenu audio/vidéo par l'utilisateur d'un terminal portable générant l'envoi d'un message de réservation comprenant le ou les contenus audio/vidéo sélectionnés et l'identifiant dudit terminal portable.

6. Méthode d'accès à un contenu à accès conditionnel selon l'une des revendications 1 à 5, **caractérisée en ce que** le message de droit contenant le droit et/ou la clé relatif audit contenu audio/vidéo est encrypté par une clé commune à une pluralité de terminaux mobiles.

7. Méthode d'accès à un contenu à accès conditionnel selon l'une des revendications 1 à 5, **caractérisée en ce que** le message de droit contenant le droit et/ou la clé relatif audit contenu audio/vidéo est encrypté par une clé propre audit terminal mobile.

8. Méthode d'accès à un contenu à accès conditionnel selon l'une des revendications 1 à 7, **caractérisée en ce que** l'arrivée du message de notification provoque l'affichage d'une nouvelle notification sur le terminal portable selon un temps prédéfini.

9. Méthode d'accès à un contenu à accès conditionnel selon l'une des revendications 1 à 8, **caractérisée en ce que** l'arrivée du message de notification provoque l'invite à l'utilisateur de valider la réception dudit contenu audio/vidéo, cette validation mettant à jour une base de données des droits et/ou clés d'autorisation et une opération de comptabilisation.

10. Méthode d'accès à un contenu à accès conditionnel selon la revendication 9, **caractérisée en ce que** l'opération de comptabilisation comprend une opération de débit d'un crédit localement stocké dans le terminal mobile.

11. Méthode d'accès à un contenu à accès conditionnel selon la revendication 9, **caractérisée en ce que** l'opération de comptabilisation génère des informations de comptabilisation qui seront transmises plus tard au centre de gestion.
